# EUROPEAN PATENT APPLICATION

(11) **EP 2 728 166 A1**
(43) Date of publication of application: **07.05.2014**
(21) Application number: 12802404.9
(22) Date of filing: 21.06.2012
(51) Int. Cl.: F03B 13/22, H02K 3/34

(54) **OCEAN WAVE GENERATOR AND OCEAN WAVE GENERATOR SYSTEM**

(30) Priority: 24.06.2011 CN 201110172753
(71) Applicant: Chen, He, Beijing 100025 (CN)
(72) Inventor: Chen, He, Beijing 100025 (CN)
(74) Representative: Röggla, Harald
(86) International application number: PCT/CN2012/000864
(87) International publication number: WO 2012/174862

(57) **Abstract**

An ocean wave generator device, comprising: a first buoy (105), a first flared opening (102, 102'), a second flared opening (103, 103'), and a generator component (101), wherein said first flared opening (102, 102') and second flared opening (103, 103') are respectively disposed on two sides of said generator component (101) and are, along with said generator component, fixed to said first buoy (105); ocean wave water passes via one flared opening to said generator component (105), and then flows via said generator component to the other flared opening. The present invention also provides an ocean wave generator system comprising the ocean wave generator device and a position fixing device (16). The ocean wave generator system fully utilizes the lateral kinetic and potential energy as well as the undulating vertical kinetic and potential energy of ocean waves. By using the diffraction principles of waves, the present invention allows for the large-scale harnessing of the ocean waves that rush inward along the coastline, and allows for greatly reduced implementation costs.

## Description

### Technical field

The present invention relates to a power generating device, and particularly to a device and system for generating power by using ocean wave energy.

### Background of the invention

Energy shortage and environment pollution have become two significant problems for people around the world. China is also undergoing power supply shortage, which has greatly influenced industrial and agricultural production and daily life of people. Finding an environmentally-friendly and sufficient new energy source is an urgent and beneficial task. Developing power generation by using ocean wave energy is a good option. However, there are problems of insufficient utilization of ocean wave energy and low efficiency of power generating devices in current designs at home and abroad.

### Summary of the invention

The present invention provides an ocean wave generator device and ocean wave generator system that uses ocean wave energy highly efficiently with regard to the problems of insufficient utilization of ocean wave energy and low efficiency of power generating devices in current designs at home and abroad.

An aspect of the technical solution of the present invention provides an ocean wave generator device.

The ocean wave generator device comprises: a first buoy, a first flared opening, a second flared opening and a generator component. The first flared opening and second flared opening are respectively disposed on two sides of the generator component and are, along with said generator component, fixed to the first buoy. Ocean water in the ocean wave passes via one flared opening to the generator component, and then flows via the generator component to the other flared opening. A port of said first flared opening approximate to the generator component is an internal port, and a port distant from the generator component is an external port; a port of said second flared opening approximate to the generator component is an internal port, and a port distant from the generator component is an external port.

Furthermore, if the ocean wave generator device is mainly used for acquiring lateral kinetic and potential energy of the ocean water, then said first buoy is located between said first flared opening and said second flared opening, and can be approximate to the upper edge portions of the external port of said first flared opening and the external port of said second flared opening.

Said first flared opening, said second flared opening and said generator component are located below said first buoy, the center of gravity of said ocean wave generator device is located below said first buoy, such that said ocean wave generator device floats in the ocean; the internal port of said first flared opening and the internal port of said second flared opening sink into the ocean water.

Ocean water in the ocean wave passes via one flared opening to the generator component, and then flows via the generator component to the other flared opening. Said ocean wave generator device may float on the ocean surface to collect the kinetic energy and wave potential energy of the ocean water in the proximity of the ocean surface, or said ocean wave generator device may suspend below the ocean surface to collect the kinetic energy and potential energy of the ocean water under the ocean surface.

If the ocean wave generator device is mainly used for acquiring vertical kinetic and potential energy of the ocean water, then said first buoy is located between said first flared opening and said second flared opening, and is distributed around the circumferences of said first flared opening and said second flared opening such that said ocean wave generator device floats in the ocean, and the wave water passes via one flared opening to the generator component, and then flows via the generator component to the other flared opening. Said ocean wave generator device may float on the ocean surface to collect the kinetic energy and wave potential energy of the ocean water in the proximity of the ocean surface, or said ocean wave generator device may suspend below the ocean surface to collect the kinetic energy and potential energy of the ocean water under the ocean surface.

In the application wherein an ocean wave generator device collects and uses vertical kinetic and potential energy of the ocean water, said ocean wave generator device may further comprise a second buoy disposed opposite to said first buoy, said first flared opening, said second flared opening and said generator component are located between said first buoy and said second buoy such that said ocean wave generator device floats in the ocean, and the wave water passes via one flared opening to the generator component, and then flows via the generator component to the other flared opening. Said ocean wave generator device may float on the ocean surface to collect the kinetic energy and wave potential energy of the ocean water in the proximity of the ocean surface, or said ocean wave generator device may suspend below the ocean surface to collect the kinetic energy and potential energy of the ocean water under the ocean surface.

Furthermore, the generator component in said ocean wave generator device comprises a pipe, an impeller, an impeller fixing means, a transmission means and a generator.

One end of said pipe is connected to the internal port of said first flared opening, and the other end of said pipe is connected to the internal port of said second flared opening, the internal port of said first flared opening and the internal port of said second flared opening are connected to each other through said pipe; said impeller is located in said pipe by means of said fixing means, wherein ocean water flows in said pipe to impel said impeller to rotate, and said impeller drives said generator to run and generate power by means of said transmission means. Said generator, said pipe and said two flared openings together are fixed on said first buoy; a housing is provided outside the generator to protect the generator from contact with and corrosion of ocean water or damp air. Besides, the transmission means can completely realize a water-isolating effect in accordance with the existing technology so as to prevent ocean water from entering into the generator along the transmission means. It should be pointed out that there may be a plurality of or a plurality of sets of said impeller, impeller fixing means, transmission means and generator.

Furthermore, the pipe of the generator component in said ocean wave generator device may also comprise one or more chamber provided with corresponding said transmission means, said generator or a plurality of generators can be located in said one or more chamber; provided with corresponding said transmission means. The position of said one or more chamber can be at any position outside the pipe or any position inside the pipe. The shape of said one or more chamber can be any shape. The main function of said chamber is to protect the generator from contact with and corrosion of ocean water or damp air. A sealed corrosion-resistant housing can be provided outside the generator itself to protect the generator from contact with and corrosion of ocean water or damp air. However, said chamber can realize dual protection of the generator. Moreover, the transmission means can completely realize a water-isolating effect in accordance with the existing technology so as to prevent ocean water from entering into the chamber or generator along the transmission means.

Furthermore, said transmission means is connected to the rotation axis of said impeller and transmits the rotating motion of said impeller to said generator to run to do work; or

Said transmission means is connected to a circumferential disc of said impeller and transmits the rotating motion of said impeller to said generator to run to do work.

Said impeller can adopt a Wells impeller, such that the impeller could rotate in the same direction and drive the generator to generate power regardless of the water flowing to the impeller via which flared opening, i.e. regardless of the water flowing to the impeller via the first flared opening or via the second flared opening.

Furthermore, the generator in said generator component may adopt a plurality of technical solutions, wherein one technical solution is that the generator may comprises at least one set of armature assembly and at least one set of pole assembly, wherein said armature assembly and said pole assembly perform relative motion around a common axis, a set of armature assembly and a set of pole assembly form a magneto-electric unit, said magneto-electric unit is distributed in a ring-shape structure outside the pipe wall in the circumferential direction of the pipe, and uses the axis of said pipe as a common axis.

In said magneto-electric unit, said armature assembly is a stator, said pole assembly is a rotator, and said rotator is driven to rotate by said transmission means; or said armature assembly is a rotator, said pole assembly is a stator, and said rotator is driven to rotate by said transmission means.

In the technical solution of said pipe comprising one or more chamber, said generator in said generator component may adopt a plurality of technical solutions, wherein one technical solution is that the generator may comprises at least one set of armature assembly and at least one set of pole assembly, wherein said armature assembly and said pole assembly perform relative motion around a common axis, a set of armature assembly and a set of pole assembly form a magneto-electric unit, said magneto-electric unit is distributed in a ring-shape structure outside the pipe wall in the circumferential direction of the pipe, and uses the axis of said pipe as a common axis. In this technical solution, said chamber, to adapt to the shape of the generator, is also distributed in a ring-shape structure outside the pipe wall in the circumferential direction of the pipe and uses the axis of said pipe as a common axis. In this way, said chamber wraps said generator outside the pipe wall in the circumferential direction of said pipe so as to protect the generator from contact with and corrosion of ocean water or damp air. It should be pointed out that there might be multiple sets of the above said generators and said accompanying chamber, which are arranged along the axis of the pipe, and said multiple sets of generators are used with multiple sets of transmission means and/or multiple sets of impellers.

In the aforesaid magneto-electric unit, said armature assembly is a stator, said pole assembly is a rotator, and said rotator is driven to rotate by said transmission means; or said armature assembly is a rotator, said pole assembly is a stator, and said rotator is driven to rotate by said transmission means.

Besides, said impeller and the rotator of said magneto-electric unit can be driven by said transmission means; or said impeller drives said rotator of said magneto-electric unit to rotate directly. In this case, a radial extension part of said impeller is a rotator of said magneto-electric unit, the rotator can either be the armature assembly or the pole assembly. In this case, said impeller is inside said pipe, and said rotator is outside the pipe wall of said pipe and distributed surround the outside of the pipe wall in a circumferential direction. Between the pipe wall of said pipe and the impeller and rotator, water-proof and water-isolating processing can be adopted in accordance with the existing technology to realize the water-proof and water-isolating function so as to prevent ocean water or damp air from entering the outside of the pipe wall from the interface between the pipe wall and the impeller and rotator and to remove problems of short circuit or device corrosion caused by ocean water or damp air entering into the generator.

Furthermore, a corrosion-resistant insulating layer and/or sealing layer is provided outside said armature assembly for protection; and/or a corrosion-resistant insulating layer and/or sealing layer is provided outside said pole assembly for protection.

In order to make water flow surging into the pipe better drive the impeller to rotate and to finally drive the generator to do work and generate power more efficiently, the internal port of said first flared opening is of a circular shape, and/or the internal port of said second flared opening is of a circular shape.

Moreover, a distance between the internal port of said first flared opening and the internal port of said second flared opening is smaller than a aperture of said internal port, such that ocean water entering into the pipe can better drive the impeller to do work and the kinetic energy of the ocean water will not loss due to attenuation by a too long pipe wall. Thus, the shorter the pipe is, the better the effect is, so that the loss of kinetic energy of the surging-in ocean water is as little as possible.

In the aforesaid technical solutions of a ocean wave generator device, with regard to ocean wave characteristics of different implementing areas and in order to achieve the optimal wave accumulating effect, an end face of the external port of said first flared opening can be a curved surface or a plane; and/or an end face of the external port of said second flared opening can be a curved surface or a plane.

Furthermore, the aperture of said first flared opening decreases regularly and gradually from the external port to the internal port or decreases irregularly and gradually; and/or the aperture of said second flared opening decreases regularly and gradually from the external port to the internal port or decreases irregularly and gradually.

In a technical solution wherein the ocean wave generator device collects and uses lateral kinetic energy and potential energy of ocean wave, with regard to ocean wave characteristics of different implementing areas and in order to achieve the optimal wave accumulating effect such that ocean water surging into the pipe drive the impeller to do work in a highest kinetic energy state and finally to drive the generator to generate power at the highest efficiency, the technical solution of the flared openings is as follows:

A horizontal height of an upper edge of the external port of said first flared opening is lower than a horizontal height of an upper edge of the internal port of said first flared opening; and/or a horizontal height of an upper edge of the external port of said second flared opening is lower than a horizontal height of an upper edge of the internal port of said second flared opening;
or
a horizontal height of an upper edge of the external port of said first flared opening is higher than a horizontal height of an upper edge of the internal port of said first flared opening; and/or a horizontal height of an upper edge of the external port of said second flared opening is higher than a horizontal height of an upper edge of the internal port of said second flared opening;
or
a horizontal height of a lower edge of the external port of said first flared opening is lower than a horizontal height of a lower edge of the internal port of said first flared opening; and/or a horizontal height of a lower edge of the external port of said second flared opening is lower than a horizontal height of a lower edge of the internal port of said second flared opening;
or
a horizontal height of a lower edge of the external port of said first flared opening is higher than a horizontal height of a lower edge of the internal port of said first flared opening; and/or a horizontal height of a lower edge of the external port of said second flared opening is higher than a horizontal height of a lower edge of the internal port of said second flared opening.

Besides, in a technical solution wherein the ocean wave generator device collects and uses lateral kinetic energy and potential energy of ocean wave, the shape of the flared openings can be as follows:
a vertical longitudinal section from an upper edge of the external port of said first flared opening to an upper edge of the internal port of said first flared opening is of an arbitrary curve shape or straight-line shape, and/or a vertical longitudinal section from an upper edge of the external port of said second flared opening to an upper edge of the internal port of said second flared opening is of an arbitrary curve shape or straight-line shape;
   or
a vertical longitudinal section from a lower edge of the external port of said first flared opening to a lower edge of the internal port of said first flared opening is of an arbitrary curve shape or straight-line shape, and/or a vertical longitudinal section from a lower edge of the external port of said second flared opening to a lower edge of the internal port of said second flared opening is of an arbitrary curve shape or straight-line shape;
   or
a horizontal cross section from a side edge of the external port of said first flared opening to a side edge of the internal port of said first flared opening is of an arbitrary curve shape or straight-line shape, and/or a horizontal cross section from a side edge of the external port of said second flared opening to a side edge of the internal port of said second flared opening is of an arbitrary curve shape or straight-line shape.

Besides, in a technical solution wherein the ocean wave generator device collects and uses lateral kinetic energy and potential energy of ocean wave, the shape of the flared openings can be as follows:
a distance from a lower edge of the external port of said first flared opening to a lower edge of the internal port of said first flared opening is smaller than a distance from an upper edge of the external port of said first flared opening to an upper edge of the internal port of said first flared opening; and/or a distance from a lower edge of the external port of said first flared opening to a lower edge of the internal port of said first flared opening is smaller than a distance from a side edge of the external port of said first flared opening to a side edge of the internal port of said first flared opening; and/or a distance from an upper edge of the external port of said first flared opening to an upper edge of the internal port of said first flared opening is smaller than a distance from a side edge of the external port of said first flared opening to a side edge of the internal port of said first flared opening;
   an/or
a distance from a lower edge of the external port of said second flared opening to a lower edge of the internal port of said second flared opening is smaller than a distance from an upper edge of the external port of said second flared opening to an upper edge of the internal port of said second flared opening; and/or a distance from a lower edge of the external port of said second flared opening to a lower edge of the internal port of said second flared opening is smaller than a distance from a side edge of the external port of said second flared opening to a side edge of the internal port of said second flared opening; and/or a distance from an upper edge of the external port of said second flared opening to an upper edge of the internal port of said second flared opening is smaller than a distance from a side edge of the external port of said second flared opening to a side edge of the internal port of said second flared opening.

Besides, in a technical solution wherein the ocean wave generator device collects and uses lateral kinetic energy and potential energy of ocean wave, the first buoy can be in multiple types of forms, but a preferred form is that a size of the buoy in the traveling direction of the ocean waves is smaller than a horizon plane in a direction perpendicular to the traveling direction of the ocean waves. The advantage of such a form is that the buoy shape is in a line with the peak form of ocean waves and coincides with the peak form, which is beneficial for the device of the present invention to receive the horizontally surging ocean waves and collect the kinetic energy and potential energy thereof. It can also prevent the buoy from floating up too early before the surging of the peak of an ocean wave, and thus reduce relative motion of the ocean wave and the flared openings and the pipe and thereby reducing kinetic energy of the ocean water to drive the impeller to do work. To achieve this purpose, the design of the first buoy is as follows:
1.A width of a cross section of said first buoy at the axis of the internal port of said first flared opening and the internal port of said second flared opening and perpendicular to the ocean surface is smaller than a width of a cross section of said first buoy at a mid-point of the axis of the two internal ports of said first flared opening and said second flared opening and perpendicular to the axis of the internal ports of the flared openings;
2.A width of a cross section of said first buoy at the axis of the internal port of said first flared opening and the internal port of said second flared opening and perpendicular to the ocean surface is smaller than a width of a cross section of said first buoy in proximity to a side edge of the external port of said first flared opening in the traveling direction of the ocean wave and perpendicular to the ocean surface;
and/or
a width of a cross section of said first buoy at the axis of the internal port of said first flared opening and the internal port of said second flared opening and perpendicular to the ocean surface is smaller than a width of a cross section of said first buoy in proximity to a side edge of the external port of said second flared opening in the traveling direction of the ocean wave and perpendicular to the ocean surface.

Besides, in order to achieve a better wave accumulating effect, said first buoy extends along the outer side of the flared opening wall of said first flared opening to form a first buoy flared opening wall protrusion, wherein said first buoy flared opening wall protrusion portion protrudes from the external port of said first flared opening; and/or said first buoy extends along the outer side of the flared opening wall of said second flared opening to form a first buoy flared opening wall protrusion, wherein said first buoy flared opening wall protrusion portion protrudes from the external port of said second flared opening. In this way, the buoy protrusion can be used to help the flared openings to achieve further wave accumulating effect.

In a technical solution wherein the ocean wave generator device collects and uses lateral kinetic energy and potential energy of ocean wave, with regard to ocean wave characteristics of different implementing areas and in order to achieve the optimal wave accumulating effect such that ocean water surging into the pipe drives the impeller to do work in a highest kinetic energy state and finally to drive the generator to generate power at the highest efficiency, a width of the cross section of the first buoy at the axis of the internal port of said first flared opening and the internal port of said second flared opening in the traveling direction of the ocean wave and perpendicular to the ocean surface is smaller than a width of the cross section of the first buoy at the axis of the internal port of said first flared opening and the internal port of said second flared opening and perpendicular to the traveling direction of the ocean wave.

In the technical solution wherein the ocean wave generator device comprises two buoys, a width of the cross section of the first buoy at the axis of the internal port of said first flared opening and the internal port of said second flared opening in the traveling direction of the ocean wave and perpendicular to the ocean surface is smaller than a width of the cross section of the first buoy at the axis of the internal port of said first flared opening and the internal port of said second flared opening and perpendicular to the traveling direction of the ocean wave; and/or
a width of the cross section of the second buoy at the axis of the internal port of said first flared opening and the internal port of said second flared opening in the traveling direction of the ocean wave and perpendicular to the ocean surface is smaller than a width of the cross section of the second buoy at the axis of the internal port of said first flared opening and the internal port of said second flared opening and perpendicular to the traveling direction of the ocean wave.

Besides, in a technical solution wherein the ocean wave generator device collects and uses vertical kinetic energy and potential energy of ocean wave, the form of the flared openings can be adjusted in the following aspects to best facilitate collection of ocean wave energy and to achieve the best power generating effect:

A flared opening wall length of the flared opening wall of said first flared opening in the direction of facing the ocean wave is smaller than a flared opening wall length in the leaving direction of the ocean wave; and/or a flared opening wall length of the flared opening wall of said second flared opening in the direction of facing the ocean wave is smaller than a flared opening wall length in the leaving direction of the ocean wave;
and/or a flared opening wall length of the flared opening wall of said first flared opening in the direction of facing the ocean wave is smaller than a flared opening wall length on an edge in a direction perpendicular to the traveling direction of the ocean wave; and/or a flared opening wall length of the flared opening wall of said second flared opening in the direction of facing the ocean wave is smaller than a flared opening wall length on an edge in a direction perpendicular to the traveling direction of the ocean wave;
and/or a flared opening wall length of the flared opening wall of said first flared opening in the leaving direction of the ocean wave is smaller than a flared opening wall length on an edge in a direction perpendicular to the traveling direction of the ocean wave; and/or a flared opening wall length of the flared opening wall of said second flared opening in the leaving direction of the ocean wave is smaller than a flared opening wall length on an edge in a direction perpendicular to the traveling direction of the ocean wave.

In all the above technical solutions wherein said ocean wave generator device comprises one buoy (including the two cases of the generator using lateral kinetic energy and potential energy of ocean wave and the generator using vertical kinetic energy and potential energy of ocean wave), said ocean wave generator device can be provided with at least one hydrofoil, said hydrofoil is located outside the flared opening wall of said first flared opening; and/or outside the flared opening wall of said second flared opening; and/or outside said generator component; and/or outside said first buoy, and said hydrofoil is in contact with ocean water. In this way, the stability of posture and balance of the generator can be enhanced, which is beneficial to the normal operation and efficient power generation of the generator.

Besides, in a technical solution wherein said ocean wave generator device comprises two buoys, said ocean wave generator device can be provided with at least one hydrofoil, said hydrofoil is located outside the flared opening wall of said first flared opening; and/or outside the flared opening wall of said second flared opening; and/or outside said generator component; and/or outside said first buoy, and/or outside said second buoy, and said hydrofoil is in contact with ocean water, similarly as the above technical solution of comprising at least one hydrofoil.

As another aspect of the technical solution of the present invention, there is provided an ocean wave generator system.

The ocean wave generator system comprises at least one aforesaid ocean wave generator device, at least one fixing means, said ocean wave generator devices are connected front-to-back in one row or at least in two rows in the traveling direction of ocean wave, wherein each row comprises at least one said ocean wave generator device, said one row or at least two rows of ocean wave generator devices are connected to one said fixing means or connected between at least two said fixing means.

Ocean waves propagate in a direction from the deep sea to the shallow sea. When an ocean wave peak surges to a generator mainly collecting lateral kinetic energy and potential energy of ocean wave to generate power, the generator cannot move along with the ocean wave due to the containing effect of the fixing means or other means connected in series front-to-back, thus, ocean water in the ocean wave forms relative motion with said means, and ocean water in the ocean wave is thus gathered together by a flared opening in the direction facing the ocean wave and flows into the pipe to impel the impeller to rotate and to do work, which in turn drives the generator to generate power. When the ocean wave leaves, the generator still cannot move along with the ocean wave due to the containing effect of the fixing means or other means connected in series front-to-back, thus, ocean water in the ocean wave again forms relative motion with said means and ocean water enters into the pipe from the flared opening in the leaving direction of the ocean wave to impel the impeller to rotate and to do work, which in turn drives the generator to generate power. Ocean waves surge repeatedly, and the aforesaid process is repeated to generate power continuously. The motion trajectory of water protons in the ocean wave is explained in detail in the following part of specific manners of carrying out the invention in the Description. Said impeller can adopt a Wells impeller, such that the impeller rotates in the same direction and drives the generator to generate power regardless of the water flow flowing through the impeller in which direction.

In a technical solution wherein the ocean wave generator device mainly collects and uses vertical kinetic and potential energy of the ocean water to generate power, when the surging ocean wave arrives at a generator for collecting vertical ocean wave energy, under the gathering function of an lower flared opening of an upside-down shallow bowl shape, the ocean water in the ocean wave forms vertical relative motion with this generator where the ocean wave arrives under the overall action of gravity of the generator and the drag braking of other ocean wave generator devices connected in series front-to-back or fixing means, and ocean water surges into the internal port of said lower flared opening and then enters into the pipe to impel the impeller to rotate and to do work, which in turn drives the generator to generate power. The ocean water passing through the impeller further surges into the upper flared opening along the pipe and is collected and born by the upper flared opening. The upper flared opening, like a bowl, can just bear ocean water. After the ocean wave surges, ocean water collected and born by the upper flared opening flows down through the internal port of the upper flared opening along the pipe due to action of its own gravity and impels the impeller to rotate and to do work, which in turn drives the generator to generate power in this process. The ocean water flowing through the impeller continues to flow down, flows through the internal port of the lower flared opening into the lower flared opening and the ocean. Ocean waves surge repeatedly, and the aforesaid process is repeated to generate power continuously. Said impeller can adopt a Wells impeller, such that the impeller rotates in the same direction and drives the generator to generate power regardless of the water flowing up into the upper flared opening via the impeller or flowing from the upper flared opening through the impeller down into the lower flared opening and the ocean.

Fixing means of an ocean wave generator system may have multiple options. For instance, a first implementation of a fixing means is as follows: a fixing means in a generator system comprises an anchor and a cable, said multiple rows of or multiple ocean wave generator devices are connected sequentially via a chain, cable or rigid rod and are fixed via said anchor and said cable such that said multiple rows of or multiple ocean wave generator devices float on the ocean surface or suspend in the ocean water; a power cable is further connected between said multiple rows of or multiple ocean wave generator devices.

A second implementation of a fixing means in the ocean wave generator system is that: the fixing means comprises at least a pile fixed in the ocean water and a pulley sleeve covering over said pile.

At least a row of or one said ocean wave generator devices are connected to said pulley sleeve via a chain, cable or rigid rod and are fixed on a pile such that said at least a row of or one said ocean wave generator devices float on the ocean surface or suspend in the ocean water;
or said at least a row of or one said ocean wave generator devices are connected between at least two said pulley sleeves via a chain, cable or rigid rod, wherein each said pulley sleeve covers over one said pile correspondingly such that said at least a row of or one said ocean wave generator devices float on the ocean surface or suspend in the ocean water.

Furthermore, when the second implementation of the fixing means is adopted, the ocean wave generator system can comprise at least two rows of or two ocean wave generator devices, said at least two rows of or two ocean wave generator devices are connected sequentially via a chain, cable or rigid rod, and a power cable is further connected between said at least two rows of or two ocean wave generator devices; or
said at least two rows of or two ocean wave generator devices are connected to said pulley sleeve via a chain, cable or rigid rod and are fixed on a pile such that said at least two rows of or two ocean wave generator devices float on the ocean surface or suspend in the ocean water;
or said at least two rows of or two ocean wave generator devices are connected between at least two said pulley sleeves via a chain, cable or rigid rod, wherein each said pulley sleeve covers over one said pile correspondingly such that said at least two rows of or two ocean wave generator devices float on the ocean surface or suspend in the ocean water.

In the second implementation of the fixing means, said pulley sleeve comprises a sleeve, a third buoy, at least one row of wheels and a fixing wheel means.

Said sleeve covers over said pile, said at least one row of wheels are located between said sleeve and said pile and is fixed in said sleeve by means of said fixing wheel means; said third buoy is connected to the sleeve, said at least one row of wheels work in collaboration with said third buoy to make said pulley sleeve float on the ocean surface or suspend in the ocean water and float up and down along said pile. In this way, it can be ensured that the fixing means of the whole system can perform a lateral fixing function to the serially connected generators and achieve the effect of restricting the relative displacement of the whole set of generators when the tide rises or falls, i.e. in the case that the altitude of ocean surface changes. In this way, the generator(s) will not move along with the waves under the impact of the ocean waves and the ocean water particles in the ocean wave thus can generate relative motion with the flared openings, pipe and impeller of the generator. Generation of relative motion is important because it is the relative motion that impels the impeller to rotate and to do work and thus drives the generator to generate power.

The beneficial effect of the present invention is as follows: the ocean wave generator device of the present invention creatively makes full use of ocean wave energy, creatively makes full use of lateral kinetic energy and potential energy of ocean waves and also creatively makes full use of undulating vertical kinetic energy and potential energy of ocean waves, thereby enhancing the utilization efficiency of ocean wave energy while enhancing the power generation efficiency of ocean waves.

Apart from this, the present invention particularly and creatively uses diffraction principles of waves and longitudinally collects ocean wave energy from the ocean waves that surge laterally in rows along the coastline in the nature. In this way, the use amount of anchors or piles can be greatly reduced, whereby the cost can be reduced significantly. Specifically:

For the ocean waves that surge laterally in rows along the coastline, if large-scale collecting of ocean wave energy to generate power is desired, ocean wave generator devices can be arranged laterally along the coastline, but this requires at least one anchor or pile to be provided for each ocean wave generator device to fix the ocean wave generator device, then it is necessary to arrange a large amount of anchors or piles laterally along the coastline (in order to realize large-scale power generation, a large amount of ocean wave generator devices need to be arranged) to fixe said ocean wave generator devices. However, arrangement of a large amount of anchors or piles necessarily results in increase of cost and difficulty in implementation. Moreover, arrangement of a large amount of anchors or piles is adverse to coastline ocean ecology or may even destroy coastline ocean ecology.

Diffraction is also called 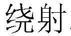 ,which refers to the phenomenon of waves continue to propagate when meeting an obstacle or a small hole through scattering. Diffraction phenomenon is an exclusive phenomenon of waves. All waves have diffraction phenomenon.

In the ocean wave generator system of the present invention, a plurality of ocean wave generator devices float on the ocean surface and are connected in series front-to-back, in a longitudinal team, and spaced apart from each other. This creative special structure can take full advantage of diffraction phenomenon because after ocean waves pass through the front ocean wave generator device which collect the ocean wave energy, the ocean waves will restore their waveform and energy for continuous collecting by the following ocean wave generator device. In this way, the technical solution of the present invention creatively uses a unique technique to realize longitudinally collecting of energy of the ocean waves that surge laterally in rows along the coastline by an ocean wave generator device for power generation, and thereby reducing the amount of fixing means such as anchors or piles required in a power generation system to the maximal extent and thus greatly reducing cost and difficulty in implementation.

The present invention uniquely uses diffraction principles into ocean wave power generation to obtain beneficially effects.

Moreover, since ocean wave generator devices connected in series floats on the ocean surface, the offshore ocean ecology and environment can be protected from destruction to the maximal extent. Besides, when special weather, such as big waves, approaches, accompanying ships can be used to collect the ocean wave generator devices back in advance in accordance with weather forecast to avoid influence or destruction of adverse weather to the power generation system.

Furthermore, the present generator or the whole system is not only applicable for floating on the ocean surface, the generator and system can also suspend under the ocean surface in implementation. Moreover, the generator and system are not limited to utilization of ocean waves or ocean wave energy either, the technical solutions provided by the present invention can be used in any water area having water flows or waves, such as a river, lake, and sea area or water area having sea currents or ocean currents.

### Brief description of the drawings

Fig. 1 is a front view of the structure of an implementation of an ocean wave generator device making use of lateral kinetic energy and potential energy of ocean waves according to the present invention;
Fig. 2 is a front view of the structure of another implementation of an ocean wave generator device making use of lateral kinetic energy and potential energy of ocean waves according to the present invention;
Fig. 3 is a front view of the structure of an implementation of an ocean wave generator device with one buoy making use of vertical kinetic energy and potential energy of ocean waves according to the present invention;
Fig. 4 is a front view of the structure of an implementation of an ocean wave generator device with two buoys making use of vertical kinetic energy and potential energy of ocean waves according to the present invention;
Fig. 5 is an illustrative diagram of Airy theory principles;
Fig. 6 is an illustrative diagram when water flows through a vertical cross section A-B perpendicular to the ocean surface;
Fig. 7 is an illustrative diagram of the structure of an implementation of a generator component in the present invention;
Fig. 8 is an illustrative diagram of the structure of an implementation of a generator in the present invention;
Fig. 9 is an illustrative diagram of a first structure of flared openings and impeller in an ocean wave generator device according to the present invention;
Fig. 10 is an illustrative diagram of a second structure of flared openings and impeller in an ocean wave generator device according to the present invention;
Fig. 11 is an illustrative diagram of a third structure of flared openings and impeller in an ocean wave generator device according to the present invention;
Fig. 12 is an illustrative diagram of a fourth structure of flared openings and impeller in an ocean wave generator device according to the present invention;
Fig. 13 is a side view of a flared opening form shown in Fig. 10;
Fig. 14 is an illustrative diagram of an overlooking view of a horizontal cross section of a form of the first buoy in the present invention;
Fig. 15 is an illustrative diagram of an overlooking view of a horizontal cross section of another form of the first buoy in the present invention;
Fig. 16 is an illustrative diagram of the constitution of an ocean wave generator system according to the present invention;
Fig. 17 is an illustrative diagram of the structure of an implementation of the fixing means in the present invention.

### Specific modes of carrying out the present invention

The principle and features of the present invention are described hereinafter in detail with reference to the drawings, and the embodiments are only used for explaining the present invention instead of limiting the scope of the present invention.

An aspect of the technical solution of the present invention provides an ocean wave generator device, and the specific implementation thereof is as follows.

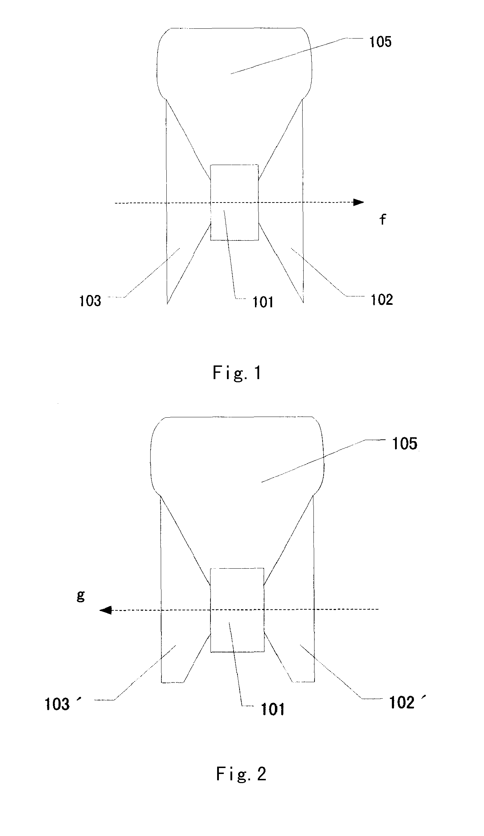

Referring to Fig. 1 and Fig. 2, the ocean wave generator device of the present invention comprises: a first buoy 105, a first flared opening 102/102', a second flared opening 103/103'and a generator component 101. Wherein, the first flared opening 102/102' and second flared opening 103/103' are respectively disposed on two sides of the generator component 101 and are, along with said generator component 101, fixed to the first buoy 105. Ocean water in ocean waves passes via one flared opening to the generator component 101, and then flows via the generator component 101 to the other flared opening. In the generator shown in Fig. 1, ocean waves pass via the second flared opening 103 into the generator component 101, and then flow out via the first flared opening 102. In the generator shown in Fig. 2, ocean waves pass via the first flared opening 102' into the generator component 101, and then flow out via the second flared opening 103'. The generator component may comprise a water turbine and a generator linked thereto. The ocean wave generator device of the present invention can make full use kinetic energy and potential energy of ocean waves and successfully utilize ocean water flowing through the generator component to impel an impeller of the water turbine to rotate, whereby driving the generator to generate power and converting ocean wave energy into electrical energy to output.

A first application of the ocean wave generator device of the present invention is to mainly utilize lateral kinetic energy and potential energy of ocean waves. As shown in Fig. 1 and Fig. 2, in order to ensure that the ocean wave generator device can float on the ocean surface during application, a first buoy 105 is arranged. The first buoy 105 is located between said first flared opening 102/102' and said second flared opening 103/103', and approximate to an upper edge portion of the external port of said first flared opening 102/102'and the external port of said second flared opening 103/103'. Said first flared opening 102/102', said second flared opening 103/103' and said generator component 101 are located below said first buoy 105, the center of gravity of said ocean wave generator device is located below said first buoy 105, such that said ocean wave generator device floats in the ocean; wherein the internal port of said first flared opening 102/102' and the internal port of said second flared opening 103/103' sink into the ocean water. Ocean water in ocean waves passes via one flared opening to the generator component 101, and then flows via the generator component 101 to the other flared opening. As shown in Fig. 2, it might be the first flared opening 102' facing the coming direction of ocean waves, and the second flared opening 103' facing the leaving direction of ocean waves. In specific application of the generator, the buoyancy force generated by the first buoy can be adjusted to make the internal port of the flared openings of the generator sink into the water, while the first buoy floats on the ocean surface, so that the generator mainly utilizes kinetic energy and potential energy of ocean waves approximate to the ocean surface; or the buoyancy force generated by the first buoy can be adjusted to make the whole generator suspend in a particular depth of the ocean water so that the generator can mainly utilize the kinetic energy of water flows in the ocean currents to generate power.

A second application of the ocean wave generator device according to the present invention is to mainly use vertical kinetic and potential energy of ocean waves, which may include the following two implementations.

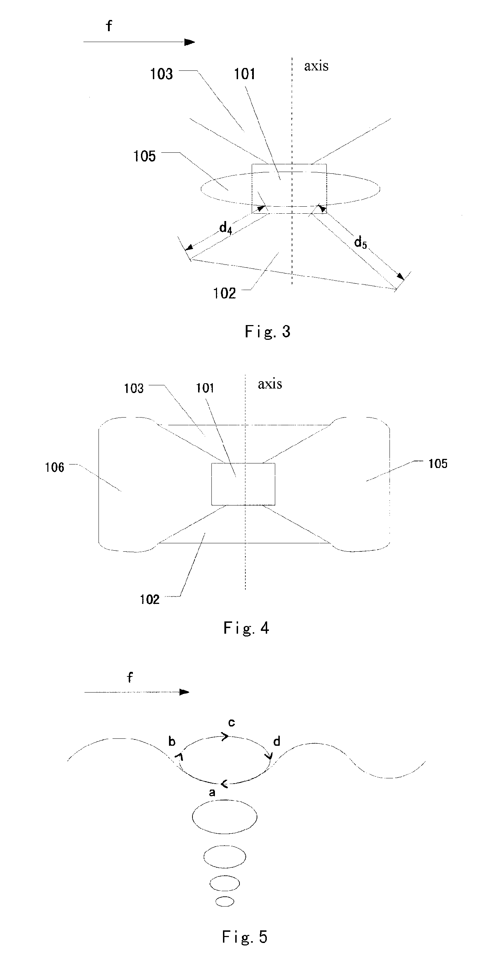

In a first implementation, the ocean wave generator device comprises only one first buoy. As shown in Fig. 3, said first buoy 105 is located between said first flared opening 102 and said second flared opening 103, and is distributed circumferentially around the first flared opening 102 and the second flared opening 103 such that said ocean wave generator device floats in the ocean with the first flared opening 102 facing the ocean bottom and the second flared opening 103 facing the sky. Ocean water in ocean waves passes via one flared opening to the generator component, and then flows via the generator component to the other flared opening. Said first buoy are surround the first flared opening 102 and the second flared opening 103 in a ring shape such that the ocean wave generator device floats on the ocean surface or suspend in the ocean through the buoyancy action provided by the first buoy. In this way, when the ocean wave generator device is disposed in ocean water for application after being rotated by 90°, the ocean wave generator device can utilize vertical kinetic and potential energy of ocean waves to convert ocean wave energy into electrical energy to output.

In a second implementation, the ocean wave generator device further comprises a second buoy 106. As shown in Fig. 4, the second buoy 106 is disposed opposite to the first buoy 105, said first flared opening 102, said second flared opening 103 and said generator component 101 are located between said first buoy 105 and said second buoy 106 such that said ocean wave generator device floats in the ocean with the first flared opening 102 facing the ocean bottom and the second flared opening 103 facing the sky. Ocean water in ocean waves passes via one flared opening to the generator component, and then flows via the generator component to the other flared opening. The two buoys 105 and 106 disposed in opposition can ensure the balance of the ocean wave generator device itself, whereby keeping the generator in a normal operating state.

Due to comprehensive action of wind and other factors, water particles in real ocean waves in the nature do not only contain up-and-down undulating vertical energy, but also contain lateral kinetic energy and potential energy. Besides, water particles in ocean waves usually have larger lateral kinetic energy and potential energy than its up-and-down undulating vertical energy because actual offshore waves in the nature often absorb energy of wind and under comprehensive action of other factors.

Airy theory well describes the motion characteristics of water particles in offshore ocean waves. Fig. 5 is a diagram of the principle of an ocean wave generator device of the present invention making use of lateral ocean wave energy. Wherein, f is the propagating direction of ocean waves, and the motion trajectory of water particles of offshore ocean water is of an ellipse shape, wherein c indicates that water particles have rightward lateral kinetic energy, d indicates that water particles have vertically downward kinetic energy, a indicates that water particles have leftward lateral kinetic energy and b indicates that water particles have vertically upward kinetic energy. The ocean wave generator device of the present invention can make full use of lateral kinetic energy and vertical kinetic energy of ocean waves and convert into electrical energy to output as much as possible.

The generator component in the wave generator of the present invention may have multiple implementations. For instance:

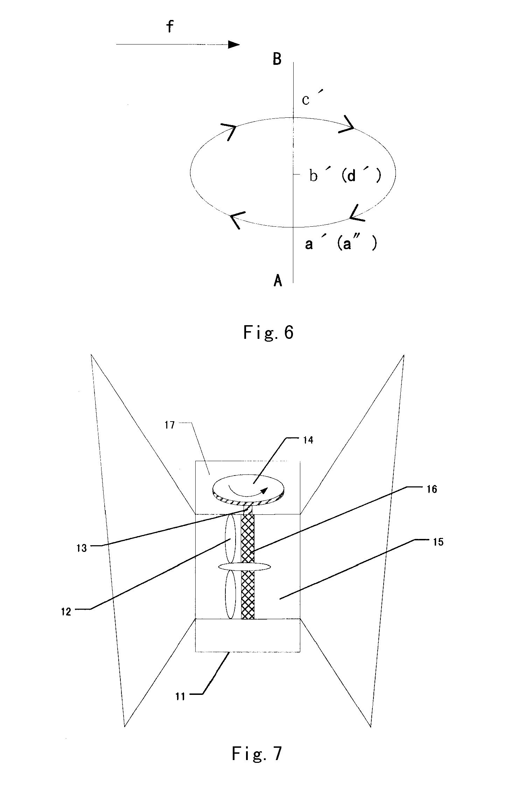

A specific implementation of the generator component is as shown in Fig. 7, wherein the generator component 11 comprises a pipe 15, an impeller 12, an impeller fixing means 16, a transmission means 13 and a generator 14. Wherein the pipe 15 comprises a chamber 17, and the generator 14 is located in the cavity of the chamber 17. The main function of the chamber 17 is to protect the generator from contact with and corrosion of ocean water or damp air. A sealed corrosion-resistant housing is provided outside the generator 14 itself to protect the generator from contact with and corrosion of ocean water or damp air. However, the chamber 17 can realize dual protection of the generator 14.

As shown in Fig. 7, the impeller 12 is located in said pipe 15 by means of said impeller fixing means 16, ocean water flows in said pipe 15 to impel said impeller 12 to rotate, said transmission means 13 is connected to the rotating shaft of the impeller 12 and transmits the rotating motion of the impeller 12 to the generator to run and do work. Said impeller 12 can adopt a Wells impeller, such that the impeller 12 rotates in the same direction and drives the generator 14 to generate power regardless of the water flow flowing through the impeller 12 from which flared opening, i.e. regardless of the water flow flowing to the impeller 12 via the first flared opening or via the second flared opening.

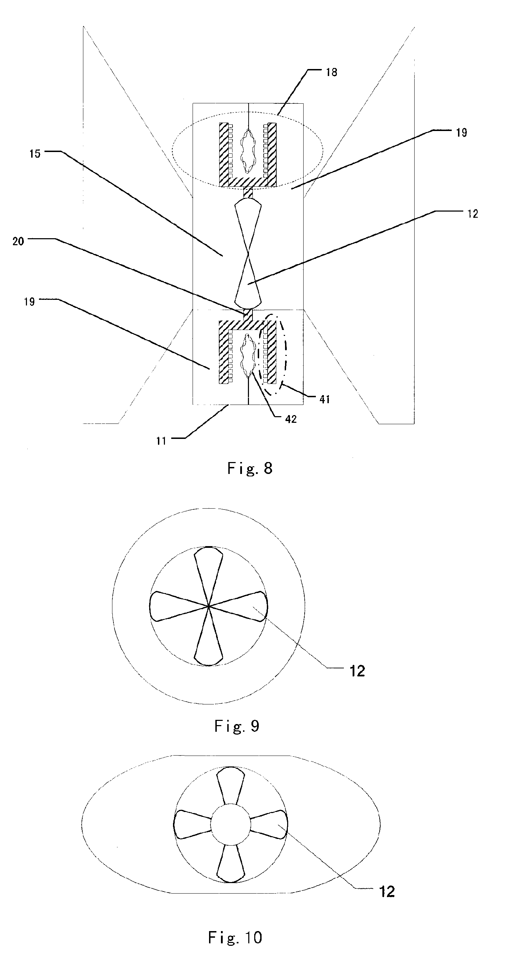

Another specific implementation of the generator component is as shown in Fig. 8, which has the following characteristics:
1) The impeller fixing means and the transmission means are of an integrated design, as shown by the reference number 20 in Fig. 8;
2) Said transmission means is connected to a circumferential disc of said impeller 12 and transmits the rotating motion of said impeller 12 to said generator 18 to run and do work;
3) The generator 18 comprises at least one set of armature assembly 42 and at least one set of pole assembly 41. Said armature assembly 42 and said pole assembly 41 perform relative motion around a common axis, and the set of armature assembly 42 and the set of pole assembly 41 form a magneto-electric unit. Said magneto-electric unit 15 is distributed in a ring-shape around the pipe 15 in the circumferential direction, and uses the axis of said pipe 15 as a common axis. When said armature assembly 42 is a stator, said pole assembly 41 is a rotator; or when said armature assembly 42 is a rotator, said pole assembly 41 is a stator. If only both of them can move in relation to each other, by cutting magnetic lines of force, magnetic-to-electric conversion can be realized through change of magnetic flux, whereby generating electrical power output.
4) The pipe 15 have a chamber 19, which adapts to the shape of the generator 18. The chamber 19 is also distributed in a ring-shape structure outside the pipe wall in the circumferential direction of the pipe 15 and uses the axis of the pipe 15 as a common axis. In this way, said chamber 19 wraps said generator 18 outside the pipe 15 in the circumferential direction of the pipe 15 so as to form additional protection of the generator 18 from contact with and corrosion of ocean water or damp air.

The generator components shown in Fig. 7 and Fig. 8 are two specific implementations only. Apart from these, there are multiple implementations, which are not described herein.

Besides, the impeller may also be disposed outside the pipe, but within the range of the flared openings. This is also a specific implementation. Besides, a mixed solution of the aforesaid two solutions can be adopted, that is, the method of disposing one impeller or several impellers in the pipe, while disposing one impeller or several impellers within the flared openings with corresponding transmission means being matched, which is not further described herein.

The implementation of an impeller may take a plurality of forms. Both fixing of the impeller to the pipe and linking an impeller to a generator can be implemented in a plurality of manners in accordance with the existing technology in the art. For instance, an impeller may have an entity rotating shaft and drive a generator via a transmission means connected thereto to generate power. The fixing means can fixe the entity rotating shaft by means of a bearing so as to fix the impeller within the pipe or within a flared opening; or the impeller does not have an entity rotating shaft, instead, it is connected to the transmission means via a disc of the impeller along the circumferential direction and directly drives the rotator in the generator to rotate, thereby making the generator do work and generate power. An impeller without an entity rotating shaft can be connected to the fixing means through a disc so as to fix the impeller within the pipe, e.g. fixing the impeller within the pipe by using the method of disposing a disc along the outmost circumference of the impeller and disposing fixing means of a ball bearing between the disc and the inner wall of the pipe, in the meanwhile, the impeller and the disc can rotate freely along the circumferential direction of the pipe wall.

A generator inside a generator component can be implemented in a plurality of manners, which are not described herein.

Besides, in order to enable the generator of the present invention to operate normally and perennially in the normal state of the generator is soaked in ocean water and to avoid corrosion of damp air, apart from using a sealed hollow chamber as secure protection of the generator, a corrosion-resistant insulating layer and a sealing layer are provided outside the armature assembly and/or pole assembly for protection, which can prevent corrosion of the magneto-electric unit by the ocean water and damp air. Also, said sealed hollow chamber can be provided with an opening and closing means which can open the hollow chamber and then close and seal the chamber, so that a generator can be installed therein and dismantled therefrom. This structure facilitates repairing or replacing.

Ocean waves propagate in a direction from the deep sea to the shallow sea. When an ocean wave peak surges in, the generator floats up under the action of the first buoy 105 and raises the position of the flared openings. In combination with the Airy theory shown in Fig. 5, it can be known that if the water flow direction is as shown by f in Fig. 1, when the valley of the ocean wave arrives, the generator descends therewith, then the water flow direction becomes the opposite, as shown by g in Fig. 2. Thus, as shown in Fig. 8, the impeller 12 in the generator component 101 in the present invention can adopt a Wells impeller, such that the water flow impels the impeller 12 to rotate in the same direction regardless of the water flow flowing through the generator component in which direction, and thereby drives the generator to run to generate power via the transmission means 13.

Fig. 5 is a diagram of movement patterns of a water particle in ocean waves. Fig. 6 is a schematic diagram of the movement condition of a single water particle passing through a fixed vertical cross section A-B perpendicular to the ocean surface (the cross section can be deemed as a simplified pipe or impeller in the present invention) when an ocean wave surges in. From the figures, it can be seen that when an ocean wave surges in from left to right (indicated by f in the figures), the movement trajectory of the water particle crossing the vertical cross section A-B is explained as follows (the following explanation should be understood by referring to Fig. 5 and Fig. 6 together):
1. The section from time point a' to time point b' represents from the valley to a half of the peak, i.e. representing 1/4 period. At this time, the water particle moves from right to left, and the water flow flows through the A-B cross section from right to left, thereby impelling the impeller 12 to run from right to left;
2. The section from time point b' to time point c' and then to time point d' represents from a half of the peak to the vertex of the peak, and from the vertex of the peak to a half of the next valley, i.e. representing 1/2 period. At this time, the water particle moves from left to right, and the water flow flows through the A-B cross section from left to right, thereby impelling the impeller 12 to run from left to right;
3. The section from time point d' to time point a" represents from a half of the valley to the bottom of the valley, i.e. representing 1/4 period. At this time, the water particle moves from right to left, and the water flow flows through the A-B cross section from right to left, thereby impelling the impeller 12 to run from right to left. By this time, a period of ocean wave movement is completed. This process repeats itself in endless cycles, and ocean waves surge in one after another, impelling the impeller 12 to run repeatedly to generate electrical power output.

It should be noted that what are described above are only simplified brief explanation and illustration of the flowing direction of ocean water in the pipe by using the Airy theory. The water flows may be more complicated in actual applications.

Furthermore, in order to make water flow surging into the pipe better impel the impeller to rotate and to finally drive the generator to do work and generate power more efficiently, the internal port of said first flared opening 102 is of a circular shape, and/or the internal port of said second flared opening 103 is of a circular shape.

Moreover, a distance between the internal port of said first flared opening 102 and the internal port of said second flared opening 103 is smaller than an aperture (if the internal port is of a circular shape, then the aperture of the internal port is the diameter of the circle) of said internal port, that is, the axial length of the pipe 15 is smaller than a radial diameter of the pipe 15. The smaller the axial length of the pipe 15, the better, as long as the impeller 12 can be installed therein. This is because energy attenuation of the kinetic energy of ocean wave itself can be reduced as much as possible within the pipe in the movement process through reducing the length of the pipe as much as possible, such that the kinetic energy of ocean wave acts on the impeller 12 directly. In this way, in the case of the same input of kinetic energy of ocean waves, the amount of collection of kinetic energy can be enhanced, thereby enhancing the conversion and output amount of electrical energy.

With regard to ocean wave characteristics of different implementing areas and in order to achieve the optimal wave accumulating effect, as shown in Figs. 1, 2, 3 and 4, the aperture of the first flared opening decreases regularly and gradually from the external port (i.e. the port of the flared opening distant from the generator component) to the internal port (i.e. the port of the flared opening approximate to the generator component) or decreases irregularly and gradually; and/or the aperture of said second flared opening decreases regularly and gradually from the external port to the internal port or decreases irregularly and gradually. That is to say, the flared openings can be of a regular bell mouth shape or of a shape formed by any irregular curved surface whose dimension decreases irregularly from outside to inside, thereby realizing the optimal wave accumulating effect with regard to ocean wave characteristics of different sea areas, enhancing the utilization ratio of ocean wave energy and increasing the amount of power generation.

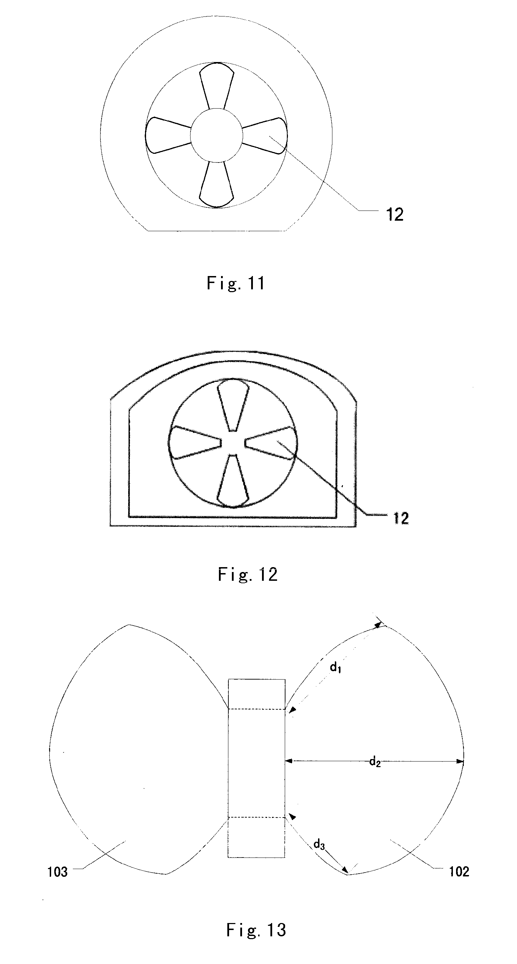

When the ocean wave generator device of the present invention uses lateral kinetic energy and potential energy of ocean wave to generate power, in order to achieve the optimal wave accumulating effect and to maximize the amount of ocean water surging into the pipe with the highest kinetic energy, the form of the flared openings can be adjusted in the following four aspects in accordance with the ocean wave characteristics in the implementing sea area:
1. A horizontal height of an upper edge of the external port of said first flared opening is lower than a horizontal height of an upper edge of the internal port of said first flared opening; and/or a horizontal height of an upper edge of the external port of said second flared opening is lower than a horizontal height of an upper edge of the internal port of said second flared opening; or
   a horizontal height of an upper edge of the external port of said first flared opening is higher than a horizontal height of an upper edge of the internal port of said first flared opening; and/or a horizontal height of an upper edge of the external port of said second flared opening is higher than a horizontal height of an upper edge of the internal port of said second flared opening; or
   a horizontal height of a lower edge of the external port of said first flared opening is lower than a horizontal height of a lower edge of the internal port of said first flared opening; and/or a horizontal height of a lower edge of the external port of said second flared opening is lower than a horizontal height of a lower edge of the internal port of said second flared opening; or
   a horizontal height of a lower edge of the external port of said first flared opening is higher than a horizontal height of a lower edge of the internal port of said first flared opening; and/or a horizontal height of a lower edge of the external port of said second flared opening is higher than a horizontal height of a lower edge of the internal port of said second flared opening.
2. A vertical longitudinal section from an upper edge of the external port of said first flared opening to an upper edge of the internal port of said first flared opening (i.e. the section of the upper flared opening wall of the first flared opening in the vertical direction) is of an arbitrary curve shape or straight-line shape, comprising parabola shape with arbitrary angle; and/or a vertical longitudinal section from an upper edge of the external port of said second flared opening to an upper edge of the internal port of said second flared opening (i.e. the section of the upper flared opening wall of the second flared opening in the vertical direction) is of an arbitrary curve shape or straight-line shape, comprising parabola shape with arbitrary angle; or
   a vertical longitudinal section from a lower edge of the external port of said first flared opening to a lower edge of the internal port of said first flared opening (i.e. the section of the lower flared opening wall of the first flared opening in the vertical direction) is of an arbitrary curve shape or straight-line shape, comprising parabola shape with arbitrary angle; and/or a vertical longitudinal section from a lower edge of the external port of said second flared opening to a lower edge of the internal port of said second flared opening (i.e. the section of the upper flared opening wall of the second flared opening in the vertical direction) is of an arbitrary curve shape or straight-line shape, comprising parabola shape with arbitrary angle; or
   a horizontal cross section from a side edge of the external port of said first flared opening to a side edge of the internal port of said first flared opening (i.e. a section of the side flared opening wall of the first flared opening in the horizontal direction) is of an arbitrary curve shape or straight-line shape, comprising parabola shape with arbitrary angle; and/or a horizontal cross section from a side edge of the external port of said second flared opening to a side edge of the internal port of said second flared opening (i.e. a section of the side flared opening wall of the second flared opening in the horizontal direction) is of an arbitrary curve shape or straight-line shape, comprising parabola shape with arbitrary angle.
3. Referring to Fig. 13, a distance d₃ from a lower edge of the external port of said first flared opening to a lower edge of the internal port of said first flared opening is smaller than a distance d₁ from an upper edge of the external port of said first flared opening to an upper edge of the internal port of said first flared opening; and/or a distance d₃ from a lower edge of the external port of said first flared opening to a lower edge of the internal port of said first flared opening is smaller than a distance d₂ from a side edge of the external port of said first flared opening to a side edge of the internal port of said first flared opening; and/or a distance d₁ from an upper edge of the external port of said first flared opening to an upper edge of the internal port of said first flared opening is smaller than a distance d₂ from a side edge of the external port of said first flared opening to a side edge of the internal port of said first flared opening;
an/or
a distance from a lower edge of the external port of said second flared opening to a lower edge of the internal port of said second flared opening is smaller than a distance from an upper edge of the external port of said second flared opening to an upper edge of the internal port of said second flared opening; and/or a distance from a lower edge of the external port of said second flared opening to a lower edge of the internal port of said second flared opening is smaller than a distance from a side edge of the external port of said second flared opening to a side edge of the internal port of said second flared opening; and/or a distance from an upper edge of the external port of said second flared opening to an upper edge of the internal port of said second flared opening is smaller than a distance from a side edge of the external port of said second flared opening to a side edge of the internal port of said second flared opening.

For side views of the flared opening forms, take Figs. 9, 10, 11 and 12 as examples. The solution shown in Fig. 10 is the optimal, and Fig. 13 is a side view of Fig. 10. This flared opening form can better use the ocean wave energy than the flared opening forms shown in the other three figures, whereby the output amount of electrical power of the generator can be enhanced. The main reasons are as follows: on the one hand, in this manner, the horizontal position of the internal port of the flared opening is approximate to the vertex of the ocean wave to the maximal extent. From the Airy theory, it can be known that a water particle closer to the vertex of an ocean wave, it has larger kinetic energy. Thus, this solution makes the ocean water surging into the internal port have larger kinetic energy, thus it is better than the cases of the flared opening forms shown in the other three figures. On the other hand, a lateral width of the external port of this type of flared opening is larger than its vertical height, which can enlarge the collecting area of lateral ocean waves while ensuring the advantage of the aforesaid first aspect. This is consistent with the natural form when an ocean wave surges in, so that a maximal possible amount of ocean water surges into the flared opening and then surges into the internal port to impel the impeller to do work, whereby the utilization ratio of ocean wave energy is enhanced.

In a technical solution wherein the ocean wave generator device uses lateral kinetic energy and potential energy of ocean wave to generate power, the first buoy can be in multiple types of forms, but a preferred form is that a size of the buoy in the traveling direction of the ocean waves is smaller than a horizon plane in a direction perpendicular to the traveling direction of the ocean waves at 90 degree. The advantage of such a form is that the buoy shape is in a line with the peak form of ocean waves and coincides with the peak form, which is beneficial for the generator of the present invention to receive the horizontally surging-in in rows ocean waves and to collect the kinetic energy and potential energy thereof. It can also prevent the buoy from floating up too early before the peak of an ocean wave surges in, which may reduce relative motion of the ocean wave with the flared openings and the pipe and thereby reduce kinetic energy of the ocean water to drive the impeller to do work. To achieve this purpose:

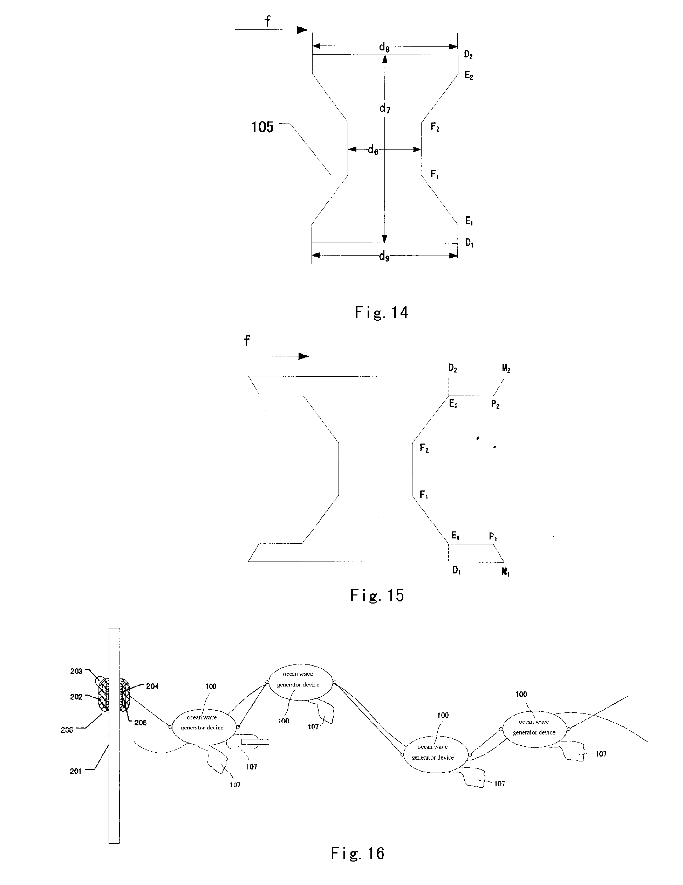

As shown in Fig. 14, a horizontal cross section of the first buoy 105 is of a dumb bell type, wherein E₂F₂F₁E₁ is a cross-section of the flared opening wall of the first flared opening 102.

A width d₆ of said first buoy 105 at the first position is smaller than a width d₇ of said first buoy at the second position. The width d₆ at the first position is a width of a cross section of said first buoy 105 at the axis of the internal port of said first flared opening 102 and the internal port of said second flared opening 103 and perpendicular to the ocean surface; and the width d₇ at the second position is a width of a cross section of said first buoy 105 at a mid-point of the axis of the internal ports of said two flared openings between said first flared opening 102 and said second flared opening 103 in the traveling direction of the ocean waves and perpendicular to the axis of the internal ports of the flared openings.

Also, a width d₆ of said first buoy at the first position is smaller than a width d₈ of said first buoy at the third position. The width d₈ at the third position is a width of a cross section of said first buoy 105 approximate to the side edge of the external port of the first flared opening 102 in the traveling direction of the ocean wave and perpendicular to the ocean surface; and/or a width d₆ of said first buoy at the first position is smaller than a width d₉ of said first buoy at the fourth position. The width d₉ at the fourth position is a width of a cross section of said first buoy 105 approximate to the side edge of the external port of the second flared opening 103 in the traveling direction of the ocean wave and perpendicular to the ocean surface.

Besides, in order to further obtain wave accumulating capability, the buoy of the generator of the present invention can be designed as follows: the first buoy 105 extends along the outer side of the flared opening wall of said first flared opening to form a first buoy flared opening wall protrusion, wherein said first buoy flared opening wall protrusion portion protrudes from the external port of said first flared opening; and/or said first buoy extends along the outer side of the flared opening wall of said second flared opening to form a first buoy flared opening wall protrusion, wherein said first buoy flared opening wall protrusion portion protrudes from the external port of said second flared opening. As shown in Fig. 15, D₁M₁P₁E₁ and D₂M₂P₂E₂ are cross sectional views of said buoy flared opening wall protrusion that protrudes from the external port of said first flared opening. By arranging a first buoy flared opening wall protrusion, on the one hand, it is equivalent to enlarging the flared opening through which ocean waves enter the generator so as to achieve the purpose of maximizing wave accumulation; and on the other hand, when an ocean wave surges in, the peak will first act on the first buoy flared opening wall protrusion, which will push the flared opening to tilt upward, and this form is more beneficial for the flared opening to bear the ocean wave and to import the accumulated ocean wave into the pipe in the internal port of the flared opening so as to make the ocean wave better impel the impeller to do work, thereby enhancing the efficiency of power generation. Besides, the buoy protrusion portion has a protection function of protecting the flared opening from collision and destruction by other objects.

Furthermore, the first buoy flared opening wall protrusion portion may have a certain titling angle, as shown by M₂P₂ and M₁P₁ in Fig. 15. This is also arranged for better accumulating waves.

The first flared opening 102 and second flared opening 103 in the present invention, on the one hand, perform the function of accumulating waves so as to increase the area and volume of collecting the surging-in ocean waves having kinetic energy and potential energy and to increase the kinetic energy of ocean water through accumulation, on the other hand, the relation between the flared openings and the generator component in the present invention and the form thereof enable the flared openings to help the surging-in ocean waves entering into the pipe in the internal port of the flared openings, such that the surging-in ocean water forms relative motion with the pipe and the impeller. It is the relative motion between the ocean water with the pipe and impeller that makes the ocean water impel the impeller 12 to rotate and finally drives the generator to run to generate electrical power.

In a technical solution wherein the ocean wave generator device uses vertical kinetic energy and potential energy of ocean wave to generate power, in order to achieve the optimal wave accumulating effect and to maximize the amount of ocean water surging into the pipe with the highest kinetic energy, in an implementation wherein the generator has only a first buoy, the dimension of the lateral width of the buoy has the following characteristics:
a width of the cross section of the first buoy 105 at the axis of the internal port of said first flared opening 102 and the internal port of said second flared opening 103 in the traveling direction of the ocean wave and perpendicular to the ocean surface is smaller than a width of the cross section of the first buoy 105 at the axis of the internal port of said first flared opening 102 and the internal port of said second flared opening 103 and perpendicular to the traveling direction of the ocean wave.

In an implementation wherein the ocean wave generator device comprises two buoys, a width of the cross section of the first buoy 105 at the axis of the internal port of said first flared opening 102 and the internal port of said second flared opening 103 in the traveling direction of the ocean wave and perpendicular to the ocean surface is smaller than a width of the cross section of the first buoy 105 at the axis of the internal port of said first flared opening 102 and the internal port of said second flared opening 103 and perpendicular to the traveling direction of the ocean wave; and/or a width of the cross section of the second buoy 106 at the axis of the internal port of said first flared opening 102 and the internal port of said second flared opening 103 in the traveling direction of the ocean wave and perpendicular to the ocean surface is smaller than a width of the cross section of the second buoy 106 at the axis of the internal port of said first flared opening 102 and the internal port of said second flared opening 103 and perpendicular to the traveling direction of the ocean wave.

In a technical solution wherein the ocean wave generator device uses vertical kinetic energy and potential energy of ocean wave to generate power, in order to realize the best wave accumulating effect, with reference to Fig. 3, a flared opening wall length d₄ of the flared opening wall of said first flared opening 102 in the direction of facing the ocean wave is smaller than a flared opening wall length d₅ in the leaving direction of the ocean wave; and/or a flared opening wall length of the flared opening wall of said second flared opening 103 in the direction of facing the ocean wave is smaller than a flared opening wall length in the leaving direction of the ocean wave;
and/or a flared opening wall length d₄ of the flared opening wall of said first flared opening 102 in the direction of facing the ocean wave is smaller than a flared opening wall length on an edge in a direction perpendicular to the traveling direction of the ocean wave; or, in other words, the length d₄ is smaller than a flared opening wall length of the flared opening 102 in the horizontal direction and perpendicular to the traveling direction of the ocean wave. Because in a three-dimensional space, it is a plane that is perpendicular to the traveling direction of ocean waves, and a straight line pointing to any direction on the plane is perpendicular to the traveling direction of the ocean wave. What is discussed herein is the case of in the horizontal direction on this plane. And/or a flared opening wall length d₄ of the flared opening wall of said second flared opening 103 in the direction of facing the ocean wave is smaller than a flared opening wall length on an edge in a direction perpendicular to the traveling direction of the ocean wave; and/or a flared opening wall length d₅ of the flared opening wall of said first flared opening 102 in the leaving direction of the ocean wave is smaller than a flared opening wall length on an edge in a direction perpendicular to the traveling direction of the ocean wave; and/or a flared opening wall length d₅ of the flared opening wall of said second flared opening 103 in the leaving direction of the ocean wave is smaller than a flared opening wall length on an edge in a direction perpendicular to the traveling direction of the ocean wave.

In the aforementioned technical solutions of the flared openings, the first and second flared openings each may also comprise at least one metal mesh to prevent objects such as kelp and seaweed that move along with the ocean wave from entering into the generator component 101 and affecting the normal running of the impeller 12. Besides, arrangement of a metal mesh can help protecting ocean creatures from influence of the operation of the ocean wave generator device and preventing ocean creatures from injury caused by the impeller.

Besides, in order to ensure the stability of the ocean wave generator device of the present invention in the ocean water, with reference to Fig. 16, the ocean wave generator device is provided with at least one hydrofoil 107, said hydrofoil 107 is located outside the flared opening wall of said first flared opening; and/or outside the flared opening wall of said second flared opening; and/or outside said generator component 101; and/or outside said first buoy 105, and said hydrofoil is in contact with ocean water. In this way, the hydrofoil can generate a displacement resistance. By means of the hydrofoil, the balance of the generator in the water and in the case of an ocean wave surging in can be enhanced, whereby achieving the effect of preventing side-turning and enhancing the stability of the generator in the ocean water. If the ocean wave generator device further comprises a second buoy 106, then at least one hydrofoil can be arranged outside the second buoy 106. Besides, the hydrofoil 107 can be a triangle foil or a multi-hydrofoil in a trident form so as to enhance the effect of maintaining the balance and stability of the ocean wave generator device. Moreover, the hydrofoil can also be arranged behind the back flared opening along the direction of the ocean wave, such that it can play the function of a tail wing like a wind vane such that the front flared opening always points to the surging-in direction of ocean waves.

Another aspect of the technical solution of the present invention provides an ocean wave generator system. The specific implementation is as follows:

The ocean wave generator system comprises at least one ocean wave generator device of the present invention and at least one fixing means, wherein said ocean wave generator devices are connected front-to-back in one row or at least in two rows in the traveling direction of ocean waves, each row comprises at least one ocean wave generator device, and said one row or at least two rows of ocean wave generator devices are connected to a fixing means or connected between at least two fixing means. The fixing means can adopt a plurality of forms. The fixing means can be fixed to the ocean bottom or fixed to other objects that do not move with or move little with the ocean waves (such as large ships docking in the ocean). In this way, by means of the function of fixing means, a single ocean wave generator device or a plurality of ocean wave generator devices as well as a whole set of multiple devices connected in series or being networked to form an ocean wave generator system will not have horizontal displacement or sideway displacement along with the ocean waves after meeting the ocean waves and will not float away with the ocean waves. In this way, a surging-in ocean wave will enter into the flared opening to the maximal extent to have relative motion with the pipe and the impeller. The ocean water impels the impeller to rotate through the relative motion and drives the generator to generate power. Apart from this, the fixing means further plays the role of maintaining the balance of the ocean wave generator device and the stability of the position of the ocean wave generator device. The electrical power generated by the ocean wave generator device can be rectified by a rectifier and then transmitted to the shore via an electric cable to be input to the power grid, or the electrical power can be transmitted to the shore via the electric cable first and then rectified and input to the power grid.

When an ocean wave generator system comprises at least two ocean wave generator devices, the at least two ocean wave generator devices are connected in series sequentially head-to-tail and are then fixed to a fixing means or fixed between two fixing means; and/or the at least two ocean wave generator devices are connected side-by-side and then fixed to a fixing means or fixed between two fixing means; and/or a plurality of ocean wave generator devices are first connected side-by-side and then connected in series front-to-back to form a plurality of rows. The aforesaid manners may have the following four connection manners after permutation and combination.
1. A plurality of ocean wave generator devices are connected in series sequentially head-to-tail via a chain, cable or rigid rod to a fixing means or between two fixing means.
2.A plurality of ocean wave generator devices are connected side-by-side to a fixing means or between two fixing means; in this case, the plurality of ocean wave generator devices can be connected side-by-side closely, share a first buoy 105, and float together in the ocean under the buoyancy force of the first buoy 105.
3. A plurality of ocean wave generator devices are connected in series sequentially head-to-tail, and then a fixing means is connected every few series of ocean wave generator devices. In this case, the fixing means are disposed spaced apart along the traveling direction of ocean waves, and the ocean wave generator devices connected in series are disposed between each two fixing means.
4. A plurality of ocean wave generator devices are first connected side-by-side closely to form a parallel-connecting unit, then a plurality of parallel-connecting units are connected in series sequentially to a fixing means or between two fixing means; or a plurality of parallel-connecting units in series are connected in series sequentially between a plurality of fixing means disposed spaced apart along the traveling direction of the ocean waves.

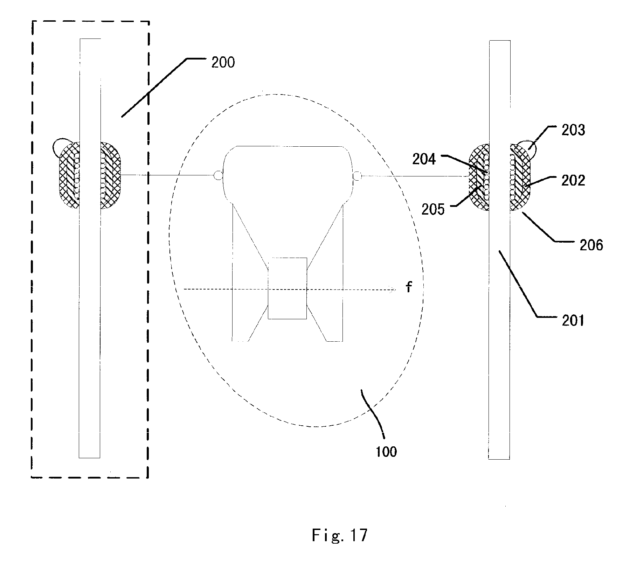

The fixing means of the present invention can adopt a plurality of forms. The fixing means can be fixed to the ocean bottom or fixed to other objects that do not move with or move little with the ocean waves, such as large ships docking in the ocean. Wherein there are two preferred implementations, the first implementation is as follows: the fixing means 200 comprises at least a pile 201 fixed in the ocean water and a pulley sleeve 206 covering over said pile 201. As shown in Fig. 16, at least a row of ocean wave generator devices 100 or one said ocean wave generator device 100 is/are connected to said pulley sleeve 206 via a chain, a cable or a rigid rod and is/are fixed to a pile 201; or as shown in Fig. 17, said at least a row of ocean wave generator devices or one ocean wave generator device is/are connected between at least two pulley sleeves 206 via a chain, a cable or a rigid rod; wherein each pulley sleeve 206 correspondingly cover over one pile 201. In this way, said at least a row of ocean wave generator devices 100 or one said ocean wave generator device 100 can float on the ocean surface or suspend in the ocean water.

Furthermore, if the ocean wave generator system comprises at least two rows of or two ocean wave generator devices, said at least two rows of or two ocean wave generator devices are connected sequentially via a chain, a cable or a rigid rod, and a cable is connected between said at least two rows of or two ocean wave generator devices. Said at least two rows of or two ocean wave generator devices are fixed to a pile 201 or fixed between at least two piles 201 via a pulley sleeve 206.

In the first implementation of the fixing means, the ocean wave generator device floats on the ocean surface or in the ocean by means of two front-to-back piles 201 and pulley sleeves 206, and the ocean wave generator device does not have front-to-back displacement along with the movement of ocean waves, such that a relatively large relative motion is formed between the ocean water entering into the flared opening of the ocean wave generator device with the pipe and the impeller, which is more beneficial for impelling the impeller to do work and to drive the generator to generate power, whereby result in a better power generation effect and efficiency. This manner is applicable both for a system constituted by a single ocean wave generator device and for a system constituted by a plurality of ocean wave generator devices as well.

Referring to Figs. 16 and 17, the pulley sleeve 206 comprises a sleeve 202, a third buoy 203, at least one row of wheels 204, a fixing wheel means 205. Wherein the sleeve 202 covers over the pile 201, and the at least one row of wheels 204 located between the sleeve 202 and the pile 201 and fixed within the sleeve 202 via the fixing wheel means 205. The third buoy 203 is connected to the sleeve 202, and the at least one row of wheels 204 works in coordination with the third buoy 206 such that the pulley sleeve 206 floats on the ocean surface or suspend in the ocean water, and can float up and down along the pile 201. Wherein the wheels 204 are used for ensuring free up-and-down movement of the pulley sleeve 206 along the pile 201 and perform the function of reducing friction, and the third buoy 203 is used for providing buoyancy force to make the pulley sleeve 206 float on the ocean surface, the two work in coordination to ensure that the pulley sleeve 206 is always on the ocean surface. In actual implementation, the sleeve may have no wheel, or it can float on the ocean surface, but the means having wheels is obviously preferred.

Floating on the ocean surface is the main implementation, but the pulley sleeve and the whole set of power generating device can adopt the implementation of suspending in the ocean water. By arranging the pulley sleeve 206, the ocean wave generator device and the sleeve 202 can float on the ocean surface simultaneously and at the same altitude when there is no wave.

A second implementation of the fixing means in the present invention is as follows. The fixing means comprises an anchor and a cable, a plurality of ocean wave generator devices are connected sequentially via a chain, a cable or a rigid rod and are fixed via said anchor and said cable such that said plurality of ocean wave generator devices float on the ocean surface; a electric cable is further connected between said plurality of ocean wave generator devices. This implementation is mainly applicable for a system constituted by a plurality of ocean wave generator devices. Besides, in application of a system constituted by a plurality of ocean wave generator devices, the solution of the foremost ocean wave generator device being connected in the front to a fixed object via a chain, a cable or a rigid rod or connected to a relatively large floating object, and then connecting the anchor chain and the anchor via the floating object, can also be adopted, wherein the relatively large floating object can be a ship or any floating object.

When a system comprises a plurality of ocean wave generator devices, if using the anchor and anchor chain to fix the ocean wave generator devices, it should be noted that the power generation efficiency of the generator at the head and the generator at the tail might be reduced in this implementation, but due to the dragging and braking function of the following plurality of generators, this fixing manner will not affect the normal operation of the plurality of generators. Although this implementing is less ideal than the first implementation in power generation efficiency, fixing by using an anchor is flexible and convenient, and the cost for installing piles can be saved. Thus, when requirement on the power generation efficiency is not high, the second implementation of the fixing means can be adopted as well. Of course, in the case that the system comprises a plurality of ocean wave generator devices, the overall power generation effect by using the first implementation of the fixing means is better.

A brief instruction to the implementation and application of the overall system of the technical solution of the present invention is given as follows

A plurality of ocean wave generator devices are connected in series, when being connected in series, it might be the case that a generator having a flared opening on its side surface is connected, in the front or in the back, to a generator having a flared opening on its upper and lower surface, and such spaced-apart arrangement may also be carried out as connecting a few generators having a flared opening on their side surfaces in series, and then connecting a few generators having flared opening on the upper or lower surface, and then connecting in series front-to-back in this way. Or a generator having a flared opening on its upper or under surface is first connected closely to a generator having a flared opening on its side surface side-by-side, or even with the two generator sharing the same buoy, then connecting front-to-back the two generators connected side-by-side in this way; and then connecting front-to-back another row of two generators, and connecting in series front-to-back a plurality of rows similarly. This is also a connecting manner and implementing scheme. Of course, a series of generators may all be generators having a flared opening on its side surface, or a series of generators may all be generators having a flared opening on its upper or lower surface.

No matter which of the aforesaid combination manner is adopted, the head and the tail of a series of generators can be respectively fixed between two piles 201 via a pulley sleeve 206 to prevent drifting of each generator and thus affecting the power generation efficiency due to the impact of ocean waves. Connecting a plurality of generators or a plurality of rows of generators in series head-to-tail sequentially can also perform the function of fixing each of the ocean wave generator devices and preventing each generator from drifting with the ocean waves under the action of ocean wave due to the mutual containing force.

If the whole system of the ocean wave generator system according to the present invention is implemented by using fixing method of using a pulley sleeve 206 and a pile 201 at both ends, then it is best to be implemented in a sea area where the ocean waves or flowing direction of ocean currents is relatively fixed. These sea areas include offshore sea areas at a strait or having fixed tides or having fixed flooding and ebbing directions of tides, the head and tail piles are arranged along the traveling direction of ocean waves or arranging a pile every particular interval (e.g. 200m) along the traveling direction of ocean waves and connecting a plurality of ocean wave generator devices in series between the piles. If the whole system is implemented by using the fixing method of using a pulley sleeve 206 and a pile 201 at only one end, then it is best implemented in sea areas where the ocean waves or ocean currents change constantly.

Moreover, the generator or the whole system is not only suitable for floating on the water surface, the generator and the system may as well be implemented as suspending under the water surface. Besides, the generator and the system of the present invention are not limited to making use of ocean waves or ocean wave energy, and they can be suitable for any water area having water flows or waves, such as a river, lake, and sea area or water area having sea currents or ocean currents.

It should be further pointed out that in technical solutions that actually use the aforesaid ocean wave generator device, there might be applications without a flared opening, and thus power can also be generated, although the power generation effect is not as good as the power generation effect of application forms having flared openings. Furthermore, the facing direction of a flared opening can be any direction in actual applications, rather than being limited to the two major application forms of being in the direction of facing the ocean waves and in the leaving direction of ocean waves mentioned in this Description. Besides, solutions of including more than one pipe can be adopted. Solutions of using a plurality of pipes corresponding to a plurality of impellers respectively or using a plurality of pipes corresponding to one impeller can be implemented.

What are described above are only preferred embodiments of the present invention, which are not used to limit the scope of protection of the present invention. Those skilled in the art know that modification, equivalent substitutions and improvements made within the spirit and principle of the present invention shall all be included in the scope of protection of the present invention.

## Claims

1. An ocean wave generator device, **characterized in**: comprising a first buoy, a first flared opening, a second flared opening and a generator component, wherein said first flared opening and second flared opening are respectively disposed on two sides of said generator component and are, along with said generator component, fixed to said first buoy; ocean wave water passes via one flared opening to said generator component, and then flows via said generator component to the other flared opening.

2. The ocean wave generator device according to claim 1, **characterized in that**: said first buoy is located between said first flared opening and said second flared opening;
said first flared opening, said second flared opening and said generator component are located below said first buoy, the center of gravity of said ocean wave generator device is located below said first buoy, such that said ocean wave generator device floats in the ocean.

3. The ocean wave generator device according to claim 1, **characterized in that**: said first buoy is located between said first flared opening and said second flared opening and is distributed around the circumferences of said first flared opening and said second flared opening such that said ocean wave generator device floats in the ocean.

4. The ocean wave generator device according to claim 1, **characterized in**: further comprising a second buoy disposed opposite to said first buoy, wherein said first flared opening, said second flared opening and said generator component are located between said first buoy and said second buoy such that said ocean wave generator device floats in the ocean.

5. The ocean wave generator device according to any one of claims 1-4, **characterized in that**: said generator component comprises a pipe, an impeller, an impeller fixing means, a transmission means and a generator;
one end of said pipe is connected to an internal port of said first flared opening, and the other end of said pipe is connected to an internal port of said second flared opening, the internal port of said first flared opening and the internal port of said second flared opening are connected to each other via said pipe; said impeller is located in said pipe by means of said fixing means, wherein ocean water flows in said pipe to impel said impeller to rotate, and said impeller drives said generator to run to generate power via said transmission means.

6. The ocean wave generator device according to claim 5, **characterized in that**: said pipe comprises at least one chamber and said generator is located in said at least one chamber.

7. The ocean wave generator device according to claim 5, **characterized in that**:
said transmission means is connected to a rotating shaft of said impeller and transmits rotating motion of said impeller to said generator to drive said generator to run to do work; or
said transmission means is connected to a circumferential disc of said impeller and transmits rotating motion of said impeller and said disc to said generator to drive said generator to run to do work.

8. The ocean wave generator device according to claim 5, **characterized in that**: said generator comprises at least one set of armature assembly and at least one set of pole assembly,
wherein said armature assembly and said pole assembly move relatively around a common axis, and a set of armature assembly and a set of pole assembly form a magneto-electric unit,
said magneto-electric unit is distributed in a ring-shape structure in the circumferential direction of the ocean water path, and uses an axis of said ocean water path as a common axis.

9. The ocean wave generator device according to claim 6, **characterized in that**: said generator comprises at least one set of armature assembly and at least one set of pole assembly,
wherein said armature assembly and said pole assembly move relatively around a common axis, and a set of armature assembly and a set of pole assembly form a magneto-electric unit,
said magneto-electric unit is distributed in a ring-shape structure in the circumferential direction of the pipe, and uses an axis of said pipe water path as a common axis.

10. The ocean wave generator device according to claim 8 or 9, **characterized in that**:
a corrosion-resistant insulating layer and/or sealing protection layer is provided outside said armature assembly; and/or
a corrosion-resistant insulating layer and/or sealing protection layer is provided outside said pole assembly.

11. The ocean wave generator device according to any one of claims 1-4, **characterized in that**:
the internal port of said first flared opening is of a circular shape;
and/or the internal port of said second flared opening is of a circular shape.

12. The ocean wave generator device according to any one of claims 1-4, **characterized in that**:
a distance between the internal port of said first flared opening and the internal port of said second flared opening is smaller than an aperture of said internal port.

13. The ocean wave generator device according to any one of claims 1-4, **characterized in that**:
an end surface of the external port of said first flared opening is a curved surface or a plane; and/or an end surface of the external port of said second flared opening is a curved surface or a plane.

14. The ocean wave generator device according to any one of claims 1-4, **characterized in that**:
the aperture of said first flared opening decreases regularly and gradually from the external port to the internal port or decreases irregularly and gradually; and/or
the aperture of said second flared opening decreases regularly and gradually from the external port to the internal port or decreases irregularly and gradually.

15. The ocean wave generator device according to claim 2, **characterized in that**:
a horizontal height of an upper edge of the external port of said first flared opening is lower than a horizontal height of an upper edge of the internal port of said first flared opening; and/or a horizontal height of an upper edge of the external port of said second flared opening is lower than a horizontal height of an upper edge of the internal port of said second flared opening; or
a horizontal height of an upper edge of the external port of said first flared opening is higher than a horizontal height of an upper edge of the internal port of said first flared opening; and/or a horizontal height of an upper edge of the external port of said second flared opening is higher than a horizontal height of an upper edge of the internal port of said second flared opening; or
a horizontal height of a lower edge of the external port of said first flared opening is lower than a horizontal height of a lower edge of the internal port of said first flared opening; and/or a horizontal height of a lower edge of the external port of said second flared opening is lower than a horizontal height of a lower edge of the internal port of said second flared opening; or
a horizontal height of a lower edge of the external port of said first flared opening is higher than a horizontal height of a lower edge of the internal port of said first flared opening; and/or a horizontal height of a lower edge of the external port of said second flared opening is higher than a horizontal height of a lower edge of the internal port of said second flared opening.

16. The ocean wave generator device according to claim 2, **characterized in that**:
a vertical longitudinal section from an upper edge of the external port of said first flared opening to an upper edge of the internal port of said first flared opening is of an arbitrary curve shape or a straight-line shape; and/or, a vertical longitudinal section from an upper edge of the external port of said second flared opening to an upper edge of the internal port of said second flared opening is of an arbitrary curve shape or a straight-line shape; or
a vertical longitudinal section from a lower edge of the external port of said first flared opening to a lower edge of the internal port of said first flared opening is of an arbitrary curve shape or a straight-line shape; and/or, a vertical longitudinal section from a lower edge of the external port of said second flared opening to a lower edge of the internal port of said second flared opening is of an arbitrary curve shape or a straight-line shape; or
a horizontal cross section from a side edge of the external port of said first flared opening to a side edge of the internal port of said first flared opening is of an arbitrary curve shape or a straight-line shape; and/or a horizontal cross section from a side edge of the external port of said second flared opening to a side edge of the internal port of said second flared opening is of an arbitrary curve shape or a straight-line shape.

17. The ocean wave generator device according to claim 2, **characterized in that**:
a distance from a lower edge of the external port of said first flared opening to a lower edge of the internal port of said first flared opening is smaller than a distance from an upper edge of the external port of said first flared opening to an upper edge of the internal port of said first flared opening; and/or a distance from a lower edge of the external port of said first flared opening to a lower edge of the internal port of said first flared opening is smaller than a distance from a side edge of the external port of said first flared opening to a side edge of the internal port of said first flared opening; and/or a distance from an upper edge of the external port of said first flared opening to an upper edge of the internal port of said first flared opening is smaller than a distance from a side edge of the external port of said first flared opening to a side edge of the internal port of said first flared opening;
an/or
a distance from a lower edge of the external port of said second flared opening to a lower edge of the internal port of said second flared opening is smaller than a distance from an upper edge of the external port of said second flared opening to an upper edge of the internal port of said second flared opening; and/or a distance from a lower edge of the external port of said second flared opening to a lower edge of the internal port of said second flared opening is smaller than a distance from a side edge of the external port of said second flared opening to a side edge of the internal port of said second flared opening; and/or a distance from an upper edge of the external port of said second flared opening to an upper edge of the internal port of said second flared opening is smaller than a distance from a side edge of the external port of said second flared opening to a side edge of the internal port of said second flared opening.

18. The ocean wave generator device according to claim 2, **characterized in that**:
a width of a cross section of said first buoy at the axis of the internal port of said first flared opening and the internal port of said second flared opening and perpendicular to the ocean surface is smaller than a width of a cross section of said first buoy at a mid-point of the axis of the two internal ports of said first flared opening and said second flared opening and perpendicular to the axis of the internal ports of the flared openings.

19. The ocean wave generator device according to claim 2, **characterized in that**:
a width of a cross section of said first buoy at the axis of the internal port of said first flared opening and the internal port of said second flared opening and perpendicular to the ocean surface is smaller than a width of a cross section of said first buoy in proximity to a side edge of the external port of said first flared opening in the traveling direction of the ocean wave and perpendicular to the ocean surface;
and/or
a width of a cross section of said first buoy at the axis of the internal port of said first flared opening and the internal port of said second flared opening and perpendicular to the ocean surface is smaller than a width of a cross section of said first buoy in proximity to a side edge of the external port of said second flared opening in the traveling direction of the ocean wave and perpendicular to the ocean surface.

20. The ocean wave generator device according to claim 2, **characterized in that**:
said first buoy extends along the outer side of the flared opening wall of said first flared opening to form a first buoy flared opening wall protrusion, wherein said first buoy flared opening wall protrusion portion protrudes from the external port of said first flared opening;
and/or
said first buoy extends along the outer side of the flared opening wall of said second flared opening to form a first buoy flared opening wall protrusion, wherein said first buoy flared opening wall protrusion portion protrudes from the external port of said second flared opening.

21. The ocean wave generator device according to claim 3, **characterized in that**:
a width of a cross section of said first buoy at the axis of the internal port of said first flared opening and the internal port of said second flared opening in the traveling direction of ocean waves and perpendicular to the ocean surface is smaller than a width of a cross section of said first buoy at the axis of the internal port of said first flared opening and the internal port of said second flared opening and perpendicular to the traveling direction of the ocean waves.

22. The ocean wave generator device according to claim 4, **characterized in that**:
a width of a cross section of said first buoy at the axis of the internal port of said first flared opening and the internal port of said second flared opening in the traveling direction of ocean waves and perpendicular to the ocean surface is smaller than a width of a cross section of said first buoy at the axis of the internal port of said first flared opening and the internal port of said second flared opening and perpendicular to the traveling direction of the ocean waves;
and/or
a width of a cross section of said second buoy at the axis of the internal port of said first flared opening and the internal port of said second flared opening in the traveling direction of the ocean waves and perpendicular to the ocean surface is smaller than a width of a cross section of said second buoy at the axis of the internal port of said first flared opening and the internal port of said second flared opening and perpendicular to the traveling direction of the ocean waves.

23. The ocean wave generator device according to claim 3 or 4, **characterized in that**:
a flared opening wall length of the flared opening wall of said first flared opening in a direction of facing ocean waves is smaller than a flared opening wall length in a leaving direction of ocean waves; and/or a flared opening wall length of the flared opening wall of said second flared opening in a direction of facing ocean waves is smaller than a flared opening wall length in a leaving direction of ocean waves;
and/or a flared opening wall length of the flared opening wall of said first flared opening in a direction of facing ocean waves is smaller than a flared opening wall length on an edge perpendicular to the traveling direction of ocean waves; and/or a flared opening wall length of the flared opening wall of said second flared opening in a direction of facing ocean waves is smaller than a flared opening wall length on an edge perpendicular to a traveling direction of ocean waves;
and/or a flared opening wall length of the flared opening wall of said first flared opening in a leaving direction of ocean waves is smaller than a flared opening wall length on an edge perpendicular to a traveling direction of ocean waves; and/or a flared opening wall length of the flared opening wall of said second flared opening in a leaving direction of ocean waves is smaller than a flared opening wall length on an edge perpendicular to a traveling direction of ocean waves.

24. The ocean wave generator device according to claim 1, 2, or 3, **characterized in that**:
said ocean wave generator device is further provided with at least one hydrofoil, said hydrofoil is located outside the flared opening wall of said first flared opening; and/or outside the flared opening wall of said second flared opening; and/or outside said generator component; and/or outside said first buoy, and said hydrofoil is in contact with ocean water.

25. The ocean wave generator device according to claim 4, **characterized in that**:
said ocean wave generator device is further provided with at least one hydrofoil, said hydrofoil is located outside the flared opening wall of said first flared opening; and/or outside the flared opening wall of said second flared opening; and/or outside said generator component; and/or outside said first buoy; and/or outside said second buoy. and said hydrofoil is in contact with ocean water.

26. An ocean wave generator system, **characterized in**: comprising at least one ocean wave generator device according to any one of claims 1-25, and at least one fixing means,
said ocean wave generator devices are are connected front-to-back in one row or at least in two rows in a traveling direction of ocean waves, wherein each row comprises at least one said ocean wave generator device, said one row or at least two rows of ocean wave generator devices are connected to one said fixing means or connected between at least two said fixing means.

27. The ocean wave generator system according to claim 26, **characterized in that**: said fixing means comprises an anchor and a cable,
said multiple rows of or multiple ocean wave generator devices are connected sequentially via a chain, a cable or a rigid rod and are fixed via said anchor and said cable such that said multiple rows of or multiple ocean wave generator devices float on the ocean surface or suspend in the ocean water;
a electric cable is further connected between said multiple rows of or multiple ocean wave generator devices.

28. The ocean wave generator system according to claim 26, **characterized in that**: said fixing means comprises at least a pile fixed in the ocean and a pulley sleeve covering over said pile;
at least a row of ocean wave generator devices or one said ocean wave generator device are/is connected to said pulley sleeve via a chain, a cable or a rigid rod and fixed to a pile such that said at least a row of ocean wave generator devices or one said ocean wave generator device float/floats on the ocean surface or suspend in the ocean water;
or said at least a row of ocean wave generator devices or one said ocean wave generator device are/is connected between at least two said pulley sleeves via a chain, a cable or a rigid rod, wherein each said pulley sleeve covers over one said pile correspondingly such that said at least a row of ocean wave generator devices or one said ocean wave generator device float/floats on the ocean surface or suspend in the ocean water.

29. The ocean wave generator system according to claim 28, **characterized in that**: said ocean wave generator system comprises at least two rows of or two ocean wave generator devices,
said at least two rows of or two ocean wave generator devices are connected sequentially via a chain, a cable or a rigid rod, and a electric cable is further connected between said at least two rows of or two ocean wave generator devices; or
said at least two rows of or two ocean wave generator devices are connected to said pulley sleeve via a chain, a cable or a rigid rod and fixed to a pile such that said at least two rows of or two ocean wave generator devices float on the ocean surface or suspend in the ocean water;
or said at least two rows of or two ocean wave generator devices are connected between at least two said pulley sleeves via a chain, a cable or a rigid rod, wherein each said pulley sleeve covers over one said pile correspondingly such that said at least two rows of or two ocean wave generator devices float on the ocean surface or suspend in the ocean water.

30. The ocean wave generator system according to claim 28 or 29, **characterized in that**: said pulley sleeve comprises a sleeve, a third buoy, at least one row of wheels and a fixing wheel means;
said sleeve covers over said pile, said at least one row of wheels are located between said sleeve and said pile and fixed in said sleeve via said fixing wheel means; said third buoy is connected to said sleeve, and said at least one row of wheels work in collaboration with said third buoy to make said pulley sleeve float on the ocean surface or suspend in the ocean water.
